# FASCICULE DE BREVET EUROPEEN

(11) **EP 1 448 355 B1**
(45) Date de publication et mention de la délivrance du brevet: **19.11.2008**
(21) Numéro de dépôt: 02750930.6
(22) Date de dépôt: 15.05.2002
(51) Int. Cl.: B29C 47/56, B29C 47/32, B29C 47/04, B29C 47/06, B60C 19/08

(54) **APPAREILLAGE DE COEXTRUSION DE MELANGES CAOUTCHOUTEUX**
VORRICHTUNG ZUM KOEXTRUDIEREN VON KAUTSCHUKMISCHUNGEN
INSTRUMENTATION FOR CO-EXTRUDING RUBBER MIXTURES

(30) Priorité: 16.05.2001 FR 0106489
(43) Date de publication de la demande: 25.08.2004
(73) Titulaire: Société de Technologie Michelin, 63040 Clermont-Ferrand Cedex 09 (FR); Michelin Recherche et Technique S.A., 1763 Granges-Paccot (CH)
(72) Inventeur: CALVAR, Didier, F-63110 Beaumont (FR); MARECHAL, Bernard, F-63190 ORLEAT (FR)
(74) Mandataire: Bauvir, Jacques
(86) Numéro de dépôt international: PCT/EP2002/005333
(87) Numéro de publication internationale: WO 2002/092322

(56) Documents cités:
- EP-A- 0 753 391
- EP-A- 0 925 903
- EP-A- 1 103 391
- WO-A-99/43506
- US-A- 5 017 118

## Description

La présente invention concerne un procédé destiné à l'obtention d'un pneumatique possédant plusieurs mélanges comprenant à titre de charge majoritaire une charge non-conductrice telle que la silice ou des mélanges faiblement chargés en noir de carbone, au moins deux de ces mélanges constituant la bande de roulement. L'invention concerne également un appareillage en vue de la mise en oeuvre d'un tel procédé.

Les problèmes d'environnement étant de plus en plus cruciaux, les économies de carburant et la lutte contre les nuisances créées par les véhicules à moteur étant devenues une priorité, un des objectifs des manufacturiers de pneumatiques est de réaliser un pneumatique possédant à la fois une très faible résistance au roulement, une excellente adhérence tant sur sol sec que sur sol humide ou enneigé ou verglacé, une très bonne résistance à l'usure, et enfin un bruit de roulement réduit.

Pour atteindre cet objectif, il a été proposé dans la demande de brevet européen EP A 501 227, un pneumatique possédant une bande de roulement comportant à titre de charge renforçante principale de la silice. Si cette solution permet d'obtenir le meilleur compromis entre l'ensemble des propriétés très contradictoires mentionnées ci-dessus, il s'est cependant avéré qu'en fonction des véhicules, les pneumatiques mettant en oeuvre une bande de roulement comportant à titre de charge renforçante principale de la silice présentent l'inconvénient d'être susceptible d'accumuler à un degré plus ou moins important l'électricité statique qui se forme par friction du pneumatique sur la route lors du roulage du véhicule en raison de l'absence de conductivité électrique de la silice.

L'électricité statique ainsi accumulée dans un pneumatique est susceptible de provoquer, lorsque certaines conditions particulières sont réunies, un désagréable choc électrique à l'occupant d'un véhicule, lorsqu'il est amené à toucher la carrosserie du véhicule. Cette électricité statique est, en outre, susceptible de hâter le vieillissement du pneumatique en raison de l'ozone générée par la décharge électrique. Elle peut également être à l'origine, en fonction de la nature du sol et du véhicule, d'un mauvais fonctionnement de la radio embarquée dans le véhicule en raison des interférences qu'elle génère.

Ce problème d'accumulation d'électricité statique dans un pneumatique et de la plupart des inconvénients qui y sont liés est fort ancien et s'est déjà posé lorsque la charge renforçante utilisée était du noir de carbone.

La demande EP 0 658 452 A1 décrit l'adaptation de principes connus de longue date à un pneumatique dit moderne, adaptation qui permet de résoudre les principaux problèmes afférant aux solutions proposées dans différents documents anciens et, en particulier, les hétérogénéités néfastes introduites dans les architectures de pneumatique. La solution proposée consiste à insérer une bande de mélange caoutchouteux conducteur ou insert, s'étendant préférentiellement sur toute la circonférence du pneumatique et reliant la surface de la bande de roulement soit à l'une des nappes de sommet, soit à l'armature de carcasse, soit à tout autre partie du pneumatique suffisamment conductrice d'électricité, la nécessaire conductivité électrique étant conférée par la présence d'un noir de carbone adapté.

Si une telle solution est parfaitement viable pour un pneumatique comportant une bande de roulement constituée par un seul mélange non-conducteur, par exemple une bande de roulement de véhicule de tourisme, il n'en est pas de même dans le cas d'un pneumatique comportant plusieurs couches de mélanges caoutchouteux au-dessus de l'armature de carcasse et des couches de mélanges caoutchouteux entre l'armature de sommet et l'armature de carcasse, comme tel est le cas de tout pneumatique susceptible de rouler avec une température de fonctionnement stabilisée élevée, comme les véhicules lourds ou les véhicules rapides.

En effet, si pour des raisons quelconques, on est amené à doter un tel pneumatique d'une couche, ou partie intérieure de la bande de roulement (partie non en contact avec le sol), non-conductrice, entre armature de sommet et partie extérieure (partie en contact avec le sol) de la bande de roulement rendue conductrice par la présence d'un insert circonférentiel ou zébrure, ladite partie intérieure devra être rendue conductrice. De même, une couche entre armature de carcasse et armature de sommet, présentant des surépaisseurs notoires dans les régions des bords de nappes de sommet, devra aussi être rendue conductrice si elle ne l'est pas initialement.

Une première solution consiste, comme décrit dans la demande française FR 97/02276 (FR-A-2759946) de la demanderesse, à assurer la connexion électrique entre deux premières couches conductrices ou rendues conductrices, séparée par une troisième couche non-conductrice, par au moins une bande de mélange caoutchouteux de faible épaisseur, largeur et longueur, posée entre les deux faces de la soudure de la troisième couche non-conductrice et en contact avec les moyens rendant conductrices les deux premières couches reliées par la connexion. Bien que satisfaisante industriellement, cette méthode nécessite une pose de produit supplémentaire et entraîne un coût de fabrication additionnel.

Une deuxième solution consiste, comme décrit dans la demande internationale WO 99/43506 de la demanderesse, à doter chaque couche non-conductrice d'un insert circonférentiel de mélange conducteur et après extrusion de ladite couche par des moyens usuels d'extrusion, et à réunir ensuite les deux produits entre eux avant pose sur le sommet, lesdites couches ayant une paroi de contact commune et la largeur de l'insert de l'une des couches au niveau de la paroi de contact étant égale à au moins 10 fois celle de l'insert de l'autre couche à ce même niveau. Cette méthode permet effectivement de rendre chaque couche conductrice et d'assurer la connexion électrique entre celles-ci et l'armature de carcasse.

Cependant, cette méthode devient trop complexe dans le cas où il ne s'agit plus seulement d'avoir deux couches constituées par deux mélanges caoutchouteux distincts mais trois couches, quatre couches ou plus avec des mélanges caoutchouteux différents.

D'autres procédé et appareils sont decrits dans les documents EP-A-0 925 903 et EP-A1 103 391.

Par ailleurs, certains mélanges caoutchouteux possèdent des propriétés rhéologiques si différentes qu'elles rendent extrêmement difficile leur collage. C'est notamment le cas lorsque l'un des mélanges est plus décohésif que l'autre. Lorsque l'on souhaite réunir de tels mélanges au sein d'une bande de roulement par exemple et afin d'éviter des astuces consistant à utiliser un agent de liaison tel qu'une colle ou une gomme spécifique de liaison entre les deux, on fait appel à la coextrusion, qui présente, de plus, un intérêt économique industriel certain. En effet, dans un procédé de coextrusion, les différents produits qui ont été séparément travaillés par des vis d'extrusion sont refoulés vers un orifice d'extrusion commun permettant l'assemblage desdits produits à chaud et sous pression.

Dans cette configuration, on pourrait envisager transposer à la coextrusion la deuxième solution. Ainsi on réaliserait un insert dans chaque produit en amont de l'orifice d'extrusion à l'aide de deux micro-extrudeuses, la buse de chaque micro-extrudeuse traversant chaque produit, de sorte que conformément à cette deuxième solution, l'un des inserts possède une base d'une largeur au moins dix fois supérieure à celle de la base en vis-à-vis de l'insert du deuxième produit. Cependant une telle solution augmente d'une part, considérablement l'encombrement de la machine de coextrusion et, d'autre part, rend très délicates les opérations de changement de produit extrudé et de nettoyage des extrudeuses.

L'invention a pour objet un appareillage de coextrusion et un procédé de mise en oeuvre de l'appareillage notamment destinés à la fabrication d'un pneumatique comprenant au moins deux couches de mélanges caoutchouteux non-conducteurs de l'électricité et un insert circonférentiel de mélange conducteur permettant la dissipation des charges électriques induites par le roulage du pneumatique, les plus simples possible et utilisant la quantité juste nécessaire de produit pour réaliser l'insert.

Selon l'invention, le procédé d'obtention d'un élément à base de mélanges caoutchouteux destiné à la fabrication d'un pneumatique est caractérisé en ce qu'il comporte les étapes suivantes :
- on extrude par coextrusion au moins deux couches de mélanges caoutchouteux sur une extrudeuse principale munie d'au moins deux vis d'extrusion respectivement pourvue d'un canal d'écoulement débouchant dans un même orifice d'extrusion délimité par une première et une deuxième parois,
- on insère par coextrusion au travers des deux couches en amont de l'orifice d'extrusion au moins un insert de mélange caoutchouteux au moyen d'une buse d'une micro-extrudeuse, ladite buse traversant les deux canaux d'écoulement.

L'adaptation du procédé utilisée pour l'extrusion d'un seul produit consistant en une injection directement au niveau de la lame d'extrusion dans le mélange profilé à la coextrusion de deux mélanges ou plus traversant ici les deux canaux d'écoulement, est difficilement envisageable pour l'homme du métier. En effet, d'une part, cela suppose en aval de ces deux « insertions » en sortie des deux canaux d'écoulement que les deux inserts viennent se superposer l'un à l'autre dans l'orifice d'extrusion. D'autre part, comme on l'a dit précédemment la coextrusion présente l'avantage considérable de réaliser un collage entre deux mélanges dont les propriétés rhéologiques rendent leur liaison extrêmement difficile à réaliser et à maintenir à moins de faire appel à la présence d'autres composés. Or ce phénomène est rendu possible dans le cadre de la coextrusion grâce à différents facteurs : un collage à cru, en température, en pression, sans contact à l'air libre et avant profilage. Il apparaît clairement a priori que la présence d'un insert créant sur toute une longueur des mélanges une interruption de leur interface, aurait pu nuire au collage des deux mélanges ou engendrer de graves défauts de liaison au niveau de l'interface entre les deux mélanges par création à l'état non vulcanisé d'amorces de décollage.

Or la demanderesse a découvert de façon surprenante que les inserts des deux mélanges se superposent effectivement très bien après le passage de cette buse et que la présence d'un insert circonférentiel dans les deux mélanges et à leur interface n'affecte pas leur liaison.

L'invention concerne également l'appareillage de coextrusion de mélanges caoutchouteux qui comprend une extrudeuse principale comportant une tête d'extrusion comprenant au moins deux canaux d'écoulement chacun d'un mélange caoutchouteux, lesdits canaux débouchant sur un même orifice d'extrusion au travers duquel sont refoulés les deux mélanges caoutchouteux, l'orifice d'extrusion étant délimité par une première et une deuxième parois, ledit appareillage comprend également au moins une micro-extrudeuse d'un troisième mélange caoutchouteux dont la tête d'extrusion est munie à son extrémité d'une buse, ladite buse traversant les deux canaux d'écoulement afin d'insérer le troisième mélange caoutchouteux dans chaque mélange caoutchouteux en amont de l'orifice d'extrusion.

D'autres avantages et caractéristiques de l'invention, apparaîtront à la lecture d'un exemple de réalisation d'un pneumatique et d'un appareillage conformes à l'invention, en référence au dessin annexé dans lequel :
- la figure 1 est une coupe longitudinale partielle de l'appareillage conforme à l'invention,
- la figure 2 est une représentation perspective schématique de la partie sommet d'un pneumatique conforme à l'invention,
- la figure 3 est une coupe longitudinale partielle d'un appareillage conforme à l'invention selon une variante de réalisation.

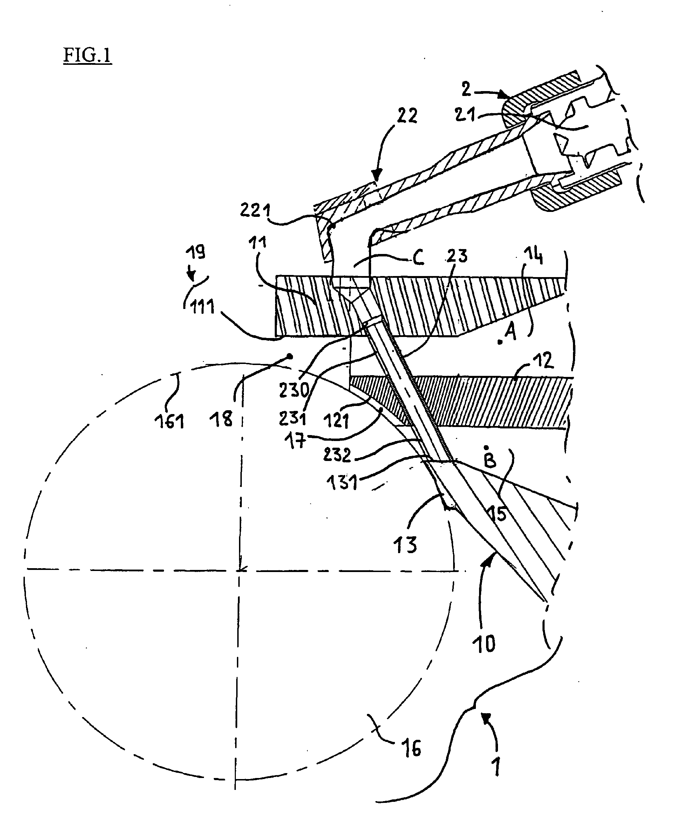

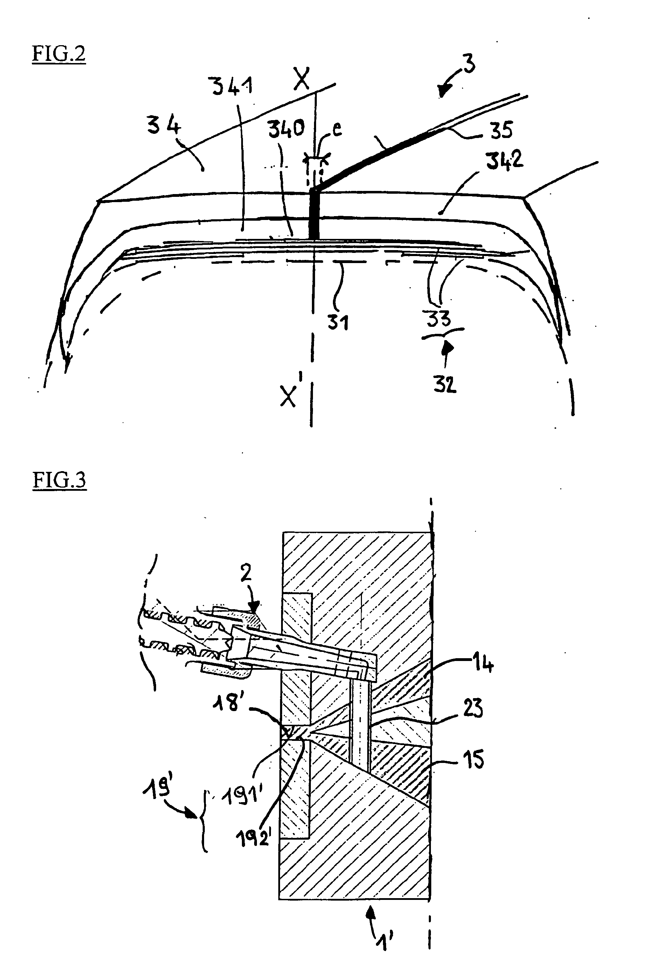

Dans ce qui suit, on désignera par les mêmes références les éléments identiques de l'appareillage représentés sur les figures 1 et 3.

On a représenté partiellement sur la figure 1, l'appareillage permettant de réaliser une bande de roulement à l'état non vulcanisé comportant deux couches de mélanges caoutchouteux A et B coextrudés et comportant un insert de mélange caoutchouteux C réalisé par coextrusion avec l'ensemble des mélanges A et B.

Ainsi selon la figure 1, est représentée une tête d'extrusion 10 d'une première extrudeuse principale 1 permettant de coextruder deux mélanges caoutchouteux non vulcanisés A et B, destiné, dans cet exemple, à la fabrication des parties inférieure et supérieure d'une bande de roulement.

La tête d'extrusion 10 comprend une voûte supérieure 11 et une voûte inférieure 13 délimitant avec un support intermédiaire 12 deux canaux d'écoulement 14 et 15 chacun d'un des mélanges A et B.

Le canal d'écoulement 15 débouche sur un premier orifice d'extrusion 17 au travers duquel mélange B est refoulé, délimité par une paroi 121 du support 12 et la surface 161 d'un rouleau 16. Cet orifice d'extrusion 17 débouche lui-même dans un deuxième orifice d'extrusion 18 dans lequel est également refoulé le mélange A arrivant par le canal d'écoulement 14 de sorte que le mélange B est disposé entre le rouleau 16 et le mélange A.

L'orifice d'extrusion 18 est délimité par une première et une deuxième paroi constituées respectivement ici par une paroi 111 portée par la voûte 11, appartenant à une lame d'extrusion 19 et par la surface extérieure 161 du rouleau 16. L'orifice d'extrusion permet ainsi de conférer à l'ensemble constitué par les deux mélanges coextrudés le profil souhaité.

Dans l'exemple choisi, l'extrudeuse est une extrudeuse dite " nez à rouleau" dans laquelle la première paroi 111 de la lame d'extrusion 19 est fixe et la deuxième paroi est mobile et constituée par la surface extérieure 161 d'un rouleau associé à l'extrudeuse. Cependant l'invention ne se limite pas à l'utilisation de ce type d'extrudeuse, on peut également envisager une extrudeuse 1' dite " à nez plat " dans laquelle les première et deuxième parois sont constituées par les deux parois fixes 191' et 192' d'une lame d'extrusion 19' telle que représentée sur la figure 3. Il existe dans cette variante de réalisation de l'invention un seul orifice d'extrusion 18.

A l'extrudeuse principale 1 est associée une extrudeuse 2 de très petite taille appelée couramment " micro-extrudeuse ", montée de manière fixe dans la voûte 11. Cette extrudeuse 2, armée d'une vis 21 et d'une tête d'extrusion 22, comporte à son extrémité une buse 23 fixée au nez de la micro-extrudeuse 2, et destinée à extruder, selon des profil et trace désirés, un insert à base d'un troisième mélange dans chaque mélange A et B non vulcanisés et chauds passant dans les canaux d'écoulement 14 et 15.

La tête d'extrusion 22 forme un coude 221 de sorte à ce que la buse d'extrusion 23, fixée au nez de la tête d'extrusion travers les deux canaux 14 et 15 et le support 12. Un mélange de caoutchouc conducteur C destiné à former l'insert, est ainsi extrudé dans chacun des flux des mélanges A et B. On peut également envisager que la micro-extrudeuse soit montée perpendiculairement à l'axe du rouleau 16, ce qui évite à la tête d'extrusion de ladite micro-extrudeuse de former un coude.

La buse d'extrusion 23 utilisée avec la micro-extrudeuse 2 possède une filière mobile, en position de contact avec la paroi supérieure 131 de la voûte 13 et traverse le support 12 permettant ainsi le passage du mélange C sur toute la longueur de la buse.

Sur la figure 1, la buse 23 est inclinée par rapport à la direction perpendiculaire aux extrémités des deux canaux d'écoulement 14 et 15 débouchant vers l'orifice d'extrusion 18. Cette disposition permet, dans l'exemple décrit, d'insérer le mélange caoutchouteux C, et donc de réaliser la zébrure dans chaque canal d'écoulement, à proximité des orifices d'extrusion 17 et 18 afin d'éviter que la zébrure ne risque de subir trop de déformations entre sa zone de création et l'orifice d'extrusion concerné. Cependant cette disposition est à déterminer en fonction d'un certain nombre de paramètres dont notamment la nature des mélanges caoutchouteux utilisés, les conditions de température et de pression au sein des extrudeuses, la largeur et la nature du mélange caoutchouteux C. C'est pourquoi selon ces critères la buse pourra ou pas former un angle d'inclinaison avec la direction des canaux d'écoulement et être plus ou moins éloignée des orifices d'extrusion.

La voûte 11 et le support 12 reçoivent dans un alésage la buse 23 à filière mobile qui présente sur sa surface cylindrique deux fentes 231, 232 réalisées suivant une section appropriée sur une partie de sa hauteur afin que chaque fente coïncide avec un des canaux d'écoulement 14, 15. Le contact entre la base de la buse à filière mobile 23 et la paroi 131 de la voûte 13 est maintenu par la pression du mélange conducteur agissant sur la section 230. Selon une variante de réalisation de l'invention, la buse 23 peut être fixée directement dur la paroi 131 de la voûte 13.

Ce dispositif permet de réaliser des zébrures dont la largeur peut varier sur une plage d'environ 0,1 mm à 2 mm sans nécessiter de faire une variation de largeur au niveau des bases des deux couches de mélanges caoutchouteux qui vont être en contact. Cependant on peut tout à fait envisager d'autre forme de fentes que celles décrites ici à titre d'exemple non limitatif. De plus, on peut avec ce dispositif réaliser si on le souhaite l'extrusion du mélange C en discontinu en fonction des applications souhaitées pour avoir, par exemple, une zébrure en « pointillés ».

L'encombrement d'un tel appareillage n'est donc que très faiblement augmenté par la présence de la micro-extrudeuse. De plus, l'utilisation d'une unique buse pour les deux canaux facilite les changements de mélanges puisqu'il suffit de s'assurer que la buse est effectivement vide pour faire un tel changement. On comprend aisément que l'on peut réaliser plusieurs inserts en prévoyant plusieurs fixations possibles dans les canaux d'écoulement qui pourront être utilisés successivement ou simultanément selon la réalisation souhaitée, à l'aide d'un nombre adapté de micro-extrudeuses. La forme des fentes réalisées sur la buse peut également varier comme on le souhaite.

De la même façon, on a choisi de présenter la réalisation d'une bande de roulement présentant deux couches de mélanges caoutchouteux mais l'invention s'applique également à la réalisation de bande de roulement comportant plus de deux couches de mélanges coextrudés.

L'appareillage décrit ci-dessus permet donc conformément à l'invention notamment la fabrication d'une bande de roulement constituée par deux mélanges non-conducteurs A et B et traversés par un insert de mélange conducteur C, d'un pneumatique tel que représenté sur la figure 2.

Selon la figure 2, le pneumatique 3, de dimension 315/80.R.22.5, conçu pour avoir une basse résistance au roulement, comprend une armature de carcasse 31, composée d'une nappe métallique formée de câbles métalliques inextensibles enrobés dans un mélange de calandrage caoutchouteux, rendu conducteur des charges électrostatiques par l'intermédiaire d'un noir de carbone couramment utilisé comme charge renforçante dans les mélanges.

L'armature de carcasse 31 est surmontée en son sommet d'une armature de sommet 32, composée, dans l'exemple décrit, de nappes et/ou demi-nappes formées de câbles métalliques. Tous les câbles de cette armature de sommet 32 sont enrobés dans un ou plusieurs mélange(s) de calandrage caoutchouteux, conducteur(s) des charges électrostatiques grâce à un noir de carbone couramment utilisé comme charge renforçante dans les mélanges.

Les couches intérieure 341 et extérieure 342 de la bande de roulement 34 sont rendues conductrices au moyen d'un insert caoutchouteux 35 ou zébrure, se présentant sous forme d'un anneau circonférentiel sur toute la hauteur de l'ensemble des deux couches 341 et 342 pour relier la surface de la bande de roulement 34 venant en contact avec le sol avec la nappe la plus extérieure radialement de l'armature de sommet 32, formée de câbles métalliques enrobés dans un mélange de caoutchouc chargé avec un noir de carbone usuel et conducteur. Cet insert 35 de très faible largeur axiale e sur la surface de bande de roulement, égale par exemple à 0,5 mm, est, dans le cas présenté, unique et centré théoriquement sur le plan équatorial XX' du pneumatique, et sa trace sur la surface de contact 340 entre la couche intérieure 341 et la nappe la plus extérieure radialement de l'armature de sommet 32 est rectiligne et circulaire. L'insert 35 pourrait être décentré, en particulier dans le cas de la présence sur la bande de roulement d'une rainure centrale ; il pourrait également y avoir deux inserts placés par exemple symétriquement par rapport au plan équatorial, ou plus, mais de toute manière placés axialement de sorte que le contact avec le sol puisse être établi quel que soit le taux d'usure de la bande de roulement. On peut également envisager que l'insert constitue un anneau circonférentiellement continu ou discontinu.

La composition de caoutchouc constituant la connexion conductrice 11 des charges électrostatiques est à base d'un caoutchouc naturel et/ou de caoutchoucs synthétiques, habituellement utilisés dans la confection des pneumatiques et particulièrement des bandes de roulement, et ayant comme charge renforçante un noir de carbone conducteur de préférence usuellement utilisé dans la fabrication des pneumatiques.

Sans sortir du cadre de l'invention, il est clair que le procédé et l'appareillage de coextrusion conformes à l'invention peuvent être utilisés pour la mise en place d'insert dans des mélanges caoutchouteux sans aspect de conduction, comme par exemple pour placer un ou des inserts de couleur dans des mélanges caoutchouteux noirs.

## Revendications

1. Procédé d'obtention d'un élément à base de mélanges caoutchouteux destiné à la fabrication d'un pneumatique comportant les étapes suivantes :
- on extrude par coextrusion au moins deux couches de mélanges caoutchouteux (A, B) sur une extrudeuse principale (1) munie d'au moins deux vis d'extrusion respectivement pourvue d'un canal d'écoulement (14, 15) débouchant dans un orifice d'extrusion (18) délimité par une première (111) et une deuxième (161) parois,
- **caractérisé en ce qu'** on insère par coextrusion au travers des deux couches au moins un insert (35) de mélange caoutchouteux (C) en amont de l'orifice d'extrusion au moyen d'une buse (23) d'une micro-extrudeuse (2), ladite buse traversant les deux canaux d'écoulement (14, 15).

2. Procédé selon la revendication 1, dans lequel les couches de mélanges caoutchouteux constituent des parties (341, 342) d'une bande de roulement (34).

3. Procédé selon la revendication 2, dans lequel les mélanges caoutchouteux (A, B) constituant les parties (341, 342) de la bande de roulement sont non-conducteurs de l'électricité et le mélange caoutchouteux (C) extrudé par la micro-extrudeuse (2) est conducteur de l'électricité.

4. Appareillage de coextrusion de mélanges caoutchouteux qui comprend une extrudeuse principale (1) comportant une tête d'extrusion (10) comprenant au moins deux canaux d'écoulement (14, 15) chacun d'un mélange caoutchouteux (A, B), lesdits canaux débouchant sur un orifice d'extrusion (18) au travers duquel sont refoulés les deux mélanges caoutchouteux (A, B), l'orifice d'extrusion (18) étant délimité par une première (111) et une deuxième (161) parois, qui comprend également au moins une micro-extrudeuse (2) d'un troisième mélange caoutchouteux (C) dont la tête d'extrusion (22) est munie à son extrémité d'une buse (23), ladite buse traversant dans les deux canaux d'écoulement (14, 15) de sorte que le troisième mélange caoutchouteux (C) soit inséré dans chaque mélange caoutchouteux (A, B) en amont de l'orifice d'extrusion (18).

5. Appareillage selon la revendication 4, dans lequel les première et deuxième parois de la lame d'extrusion sont constituées par les deux parois fixes d'une lame d'extrusion (19).

6. Appareillage selon la revendication 4, dans lequel la première paroi (111) délimitant l'orifice d'extrusion (18) étant fixe, sa deuxième paroi est constituée par la surface extérieure (161) d'un rouleau (16) porté par l'extrudeuse principale (1).

7. Appareillage selon l'une quelconque des revendications 4 ou 5, dans lequel la buse d'extrusion (23) est à filière mobile, est fendue sur une partie de sa hauteur et insérée dans un alésage.

8. Appareillage selon la revendication 7, dans lequel la base de la buse (23) est maintenue en contact avec une paroi (131) d'un des canaux d'écoulement (15) par la pression du mélange extrudé (C) par cette micro-extrudeuse (2).

9. Appareillage selon la revendication 7, dans lequel la base de la buse (23) est fixée sur une paroi (131) d'un des canaux d'écoulement (15).

## Claims

1. Process for obtaining an element based on rubber mixtures, intended for the production of a tyre, comprising the following stages:
- using a main extruder (1) provided with at least two extrusion screws, at least two layers of rubber mixtures (A, B) are co-extruded, the said extrusion screws each having a respective flow channel (14, 15) that opens into an extrusion orifice (18) delimited by a first (111) and a second (161) wall,
**charactererised in that**
- by co-extrusion through the two layers upstream from the extrusion orifice, at least one insert (35) of a rubber mixture (C) is inserted by means of a nozzle (23) of a micro-extruder (2), the said nozzle passing through the two flow channels (14, 15).

2. Process according to Claim 1, in which the layers of rubber mixture constitute parts (341, 342) of a tread (34).

3. Process according to Claim 2, in which the rubber mixtures (A, B) constituting the parts (341, 342) of the tread are non-conductors of electricity and the rubber mixture (C) extruded by the micro-extruder (2) conducts electricity.

4. Equipment for co-extruding rubber mixtures, comprising a main extruder (1) with an extrusion head (10) having at least two flow channels (14, 15) each for a rubber mixture (A, B), the said channels opening into an extrusion orifice (18) through which the two rubber mixtures (A, B) are propelled, the extrusion orifice (18) being delimited by a first (111) and a second (161) wall, the equipment also comprising a micro-extruder (2) for a third rubber mixture (C) whose extrusion head (22) is provided at its end with a nozzle (23), the said nozzle passing through the two flow channels (14, 15) such that the third rubber mixture (C) is inserted into each rubber mixture (A, B) upstream from the extrusion orifice (18).

5. Equipment according to Claim 4, in which the first and second walls of the extrusion blade consist of the two fixed walls of an extrusion blade (19).

6. Equipment according to Claim 4, in which the first wall (111) delimiting the extrusion orifice (18) is fixed and its second wall consists of the outer surface (161) of a roller (16) mounted on the main extruder (1).

7. Equipment according to either of Claims 4 or 5, in which the extrusion nozzle (23) has a mobile outlet passage, has slits along part of its height, and is inserted in a bore.

8. Equipment according to Claim 7, in which the base of the nozzle (23) is kept in contact with a wall (131) of one of the flow channels (15) by the pressure of the mixture (C) extruded by the micro-extruder (2).

9. Equipment according to Claim 7, in which the base of the nozzle (23) is fixed on a wall (131) of one of the flow channels (15).

## Patentansprüche

1. Verfahren zur Herstellung eines Elements auf Basis von Kautschukgemischen, das für die Erzeugung eines Reifens bestimmt ist, umfassend die folgenden Schritte:
- Extrusion mindestens zweier Schichten von Kautschukgemischen (A, B) durch Coextrusion auf einem Hauptextruder (1), der mit mindestens zwei Extrusionsschrauben versehen ist, die jeweils einen Abflusskanal (14, 15) umfassen, der in eine Extrusionsöffnung (18) mündet, die durch eine erste (111) und eine zweite Wand (161) begrenzt ist,
**dadurch gekennzeichnet, dass**
- durch Coextrusion durch die beiden Schichten mindestens ein Einsatz (35) eines Kautschukgemisches (C) stromaufwärts zur Extrusionsöffnung mit Hilfe einer Düse (23) eines Mikro-Extruders (2) eingesetzt wird, wobei die Düse durch die beiden Abflusskanäle (14, 15) hindurchgeht.

2. Verfahren nach Anspruch 1, bei dem die Schichten von Kautschukgemischen Teile (341, 342) einer Lauffläche (34) darstellen.

3. Verfahren nach Anspruch 2, bei dem die Kautschukgemische (A, B), die die Teile (341, 342) der Lauffläche bilden, elektrisch nicht leitend sind, und das vom Mikro-Extruder (2) extrudierte Kautschukgemisch (C) elektrisch leitend ist.

4. Gerät zur Coextrusion von Kautschukgemischen, das einen Hauptextruder (1) besitzt, umfassend einen Extruderkopf (10), umfassend mindestens zwei Abflusskanäle (14, 15) für je ein Kautschukgemisch (A, B), wobei die Kanäle in eine Extrusionsöffnung (18) münden, durch die die beiden Kautschukgemische (A, B) geleitet werden, wobei die Extrusionsöffnung (18) von einer ersten (111) und einer zweiten Wand (161) begrenzt ist, wobei das Gerät auch mindestens einen Mikro-Extruder (2) für ein drittes Kautschukgemisch (C) besitzt, dessen Extruderkopf (22) an seinem Ende mit einer Düse (23) versehen ist, wobei die Düse durch die beiden Abflusskanäle (14, 15) geht, so dass das dritte Kautschukgemisch (C) in jedes Kautschukgemisch (A, B) stromaufwärts zur Extrusionsöffnung (18) eingesetzt wird.

5. Gerät nach Anspruch 4, bei dem die erste und die zweite Wand des Extruderblättchens von den beiden festen Wänden eines Extruderblättchens (19) gebildet sind.

6. Gerät nach Anspruch 4, bei dem, da die erste Wand (111), die die Extrusionsöffnung (18) begrenzt, fest ist, seine zweite Wand von der Außenfläche (161) von einer vom Hauptextruder (1) getragenen Walze (16) gebildet ist.

7. Gerät nach einem der Ansprüche 4 oder 5, bei dem die Extrusionsdüse (23) eine bewegliche Matrize besitzt, auf einem Teil ihrer Höhe geschlitzt und in eine Bohrung eingesetzt ist.

8. Gerät nach Anspruch 7, bei dem die Basis der Düse (23) mit einer Wand (131) eines der Abflusskanäle (15) durch den Druck des von diesem Mikro-Extruder (2) extrudierten Gemisches (C) in Kontakt gehalten wird.

9. Gerät nach Anspruch 7, bei dem die Basis der Düse (23) an einer Wand (131) eines der Abflusskanäle (15) befestigt ist.
